# EUROPÄISCHE PATENTSCHRIFT

(11) **EP 0 961 426 B1**
(45) Veröffentlichungstag und Bekanntmachung des Hinweises auf die Patenterteilung: **15.02.2006**
(21) Anmeldenummer: 99109117.4
(22) Anmeldetag: 07.05.1999
(51) Int. Cl.: H04B 10/24, G02B 6/42, H01S 5/026

(54) **Bidirektionale optische Sende- und Empfangseinrichtung**
Bidirectional optical transmitter and receiver
Emetteur et récepteur optique bidirectionnel

(30) Priorität: 25.05.1998 DE 19823213
(43) Veröffentlichungstag der Anmeldung: 01.12.1999
(73) Patentinhaber: Infineon Technologies AG, 81669 München (DE)
(72) Erfinder: Hurt, Hans, 93049 Regensburg (DE); Müller, Gustav Dr., 93059 Regensburg (DE); Panzer, Klaus Dr., 93049 Regensburg (DE); Schubert, Axel, 81543 München (DE); Späth, Werner Dr., 83607 Holzkirchen (DE)
(74) Vertreter: Müller, Wolfram Hubertus

(56) Entgegenhaltungen:
- WO-A-98/31080
- DE-A- 4 444 470
- US-A- 5 140 152

## Beschreibung

Die Erfindung betrifft eine Sende- und Empfangseinrichtung gemäß dem Oberbegriff des Patentanspruchs 1.

Für die bidirektionale Datenübertragung über Glasfasern werden an beiden Enden einer Glasfaserstrecke jeweils Sende- und Empfangskomponenten benötigt, die wechselseitig einander zugeordnet werden können. Bei der Datenübertragung muß sichergestellt sein, daß der Sender auf der einen Seite und der Empfänger auf der anderen Seite der Übertragungsstrecke eine gute optische Ankopplung an die Glasfaser aufweisen. Im Stand der Technik sind beispielsweise Sende-/Empfangseinrichtungen bekannt, bei denen durch steuerbare Verzweigungselemente wie optische Weichen oder dergleichen jeweils der Sender oder der Empfänger mit der Glasfaser optisch gekoppelt werden kann. Neben derartigen Einrichtungen, die relativ kompliziert aufgebaut sind, gibt es jedoch auch einfache Aufbauten, bei denen der Sender und der Empfänger gleichbleibend mit der Glasfaser optisch gekoppelt sind. Um derartige Einrichtungen geht es in der vorliegenden Anmeldung.

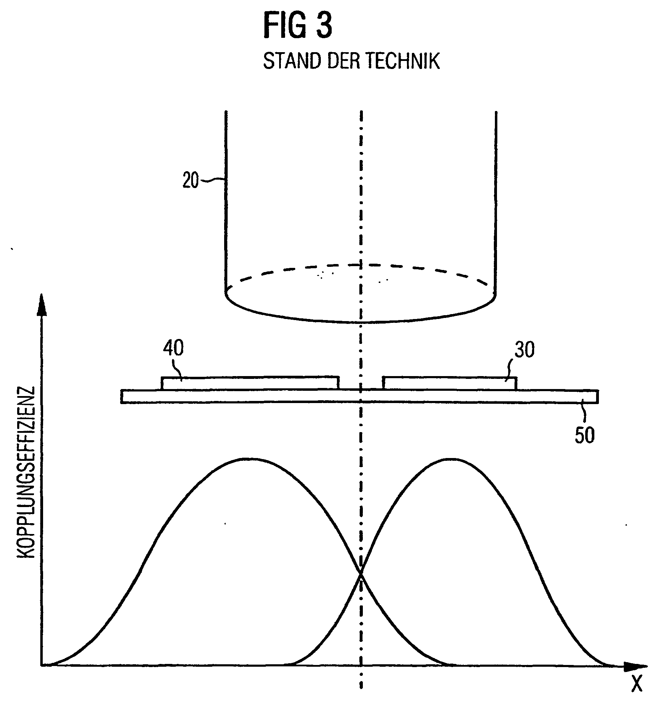

Bei einer gattungsgemäßen Sende-/Empfangseinrichtung dieser Art wird gemäß dem oberen Teil von Fig.3 eine Sendediode 30 eng benachbart neben eine Empfangsdiode (Photodiode) 40 auf ein Trägermaterial 50 gesetzt. Im unteren Teil der Fig.3 sind die sogenannten Koppelkurven der Sende- und der Empfangsdiode dargestellt. Diese Koppelkurven zeigen jeweils den Grad der Kopplung oder die Koppeleffizienz gegenüber einer lateralen Verschiebung zwischen dem Ein-/Austrittsende der Glasfaser 20 und der Sendediode 30 bzw. der Empfangsdiode 40. Die Glasfaser 20 wird mittig zwischen Sende- und Empfangsdiode justiert. Eine optimale Datenübertragung wird dann erreicht, wenn die Faserachse durch den Schnittpunkt der Koppelkurven verläuft. Der Nachteil dieser Anordnung liegt jedoch darin, daß sich die Faserachse jeweils mit den steilen Seitenflanken der Koppelkurven schneidet und somit ein lateraler Faserversatz zu einem relativ starken sende- oder empfangsseitigen Verlust führt.

In der deutschen Offenlegungsschrift DE 44 44 470 A1 und in der US Patentschrift 5,140,152 sind jeweils optische Sende- und Empfangsmodule beschrieben, bei denen ein Sendeelement und ein Empfangselement monolithisch in einem Halbleitersubstrat integriert sind. Das Sendeelement und das Empfangselement sind übereinander angeordnet.

Es ist somit Aufgabe der vorliegenden Erfindung, eine Sende-/Empfangseinrichtung für bidirektionale, optische Übertragung mit verbesserten Ankopplungsbedingungen anzugeben. Insbesondere ist es Aufgabe der vorliegenden Erfindung, eine Sende-/Empfangseinrichtung anzugeben, bei der ein lateraler Faserversatz zu einem geringeren Kopplungsverlust führt.

Diese Aufgabe wird durch die kennzeichnenden Merkmale des Patentanspruchs 1 gelöst.

Der Vorteil der Erfindung liegt zum einen darin, daß die Faserachse durch die Maxima beider Koppelkurven verläuft und somit eine effizientere Ein- und Auskopplung der optischen Strahlung ermöglicht. Zum anderen bewegt sich bei Faserversatz die Faserachse nicht entlang der steilen Flanken der Koppelkurven sondern im Bereich des Maximums, in dem sich die Kopplung nicht sehr stark ändert. Somit führt der Faserversatz nur zu einer moderaten Änderung der Übertragungseigenschaften.

Vorteilhafte Weiterbildungen sind in den Unteransprüchen angegeben.

Die Erfindung wird nachfolgend in beispielhafter Weise anhand eines einzigen Ausführungsbeispiels in Verbindung mit den Zeichnungen erläutert. In diesen zeigen:
Fig.1A eine perspektivische Ansicht einer erfindungsgemäßen Sende-/Empfangseinrichtung;
Fig.1B eine Draufsicht auf die Sende-/Empfangseinrichtung der Fig.1;
Fig.2 die relative Lage der Faserachse zu den Koppelkurven bei der Sende-/Empfangseinrichtung der Fig.1;
Fig.3 eine Sende-/Empfangseinrichtung nach dem Stand der Technik und die zugehörigen Koppelkurven.

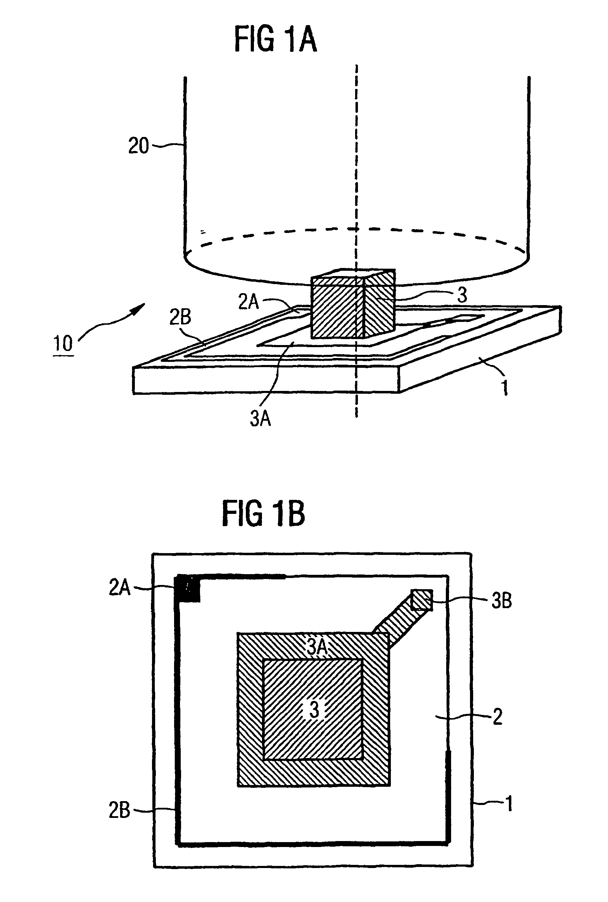

In den Fig.1A,1B ist ein Ausführungsbeispiel einer erfindungsgemäßen Sende-/Empfangseinrichtung schematisch dargestellt, wobei Fig.1B eine Draufsicht aus der Sicht der Glasfaser ist.

Die Sende-/Empfangseinrichtung 10 ist für eine bidirektionale Datenübertragung mit einer Glasfaser 20 gekoppelt und weist ein flaches, quadratisches Substrat 1 auf, auf dessen der Glasfaser zugewandter Oberfläche sich eine photoempfindliche, quadratische Fläche 2 befindet, die Teil einer Empfangsdiode (Empfangseinrichtung) ist, in der das aus der Glasfaser austretende Licht in elektrischen Strom umgewandelt wird. Auf dem größten Teil des äußeren Randes der photoempfindlichen Fläche 2 ist eine Randmetallisierung 2B aufgebracht, um die in der photoempfindlichen Fläche erzeugten Ladungsträger effizient einzusammeln. Durch eine auf die photoempfindliche Fläche 2 in einer Ecke aufgebrachte metallische Kontaktfläche 2A kann die elektrische Kontaktierung mittels eines Golddrahtes oder dergleichen erfolgen.

Die photoempfindliche Fläche 2 umschließt eine quadratische Metallisierungsfläche 3A, die der elektrischen Kontaktierung einer darauf angeordneten Laserdiode 3 (Sendeeinrichtung) dient. Die Metallisierungsfläche 3A ist durch einen metallischen Steg mit einer metallischen Kontaktfläche 3B verbunden und kann durch diese ebenfalls mittels eines Golddrahtes oder dergleichen nach außen kontaktiert werden. Wenn die Laserdiode 3 mit einem elektrischen Strom beschickt wird, emittiert sie elektromagnetische Strahlung, die in eine in der Fig.1A direkt oberhalb der oberen Endfläche der Laserdiode 3 angeordnete Glasfaser 20 eingekoppelt wird.

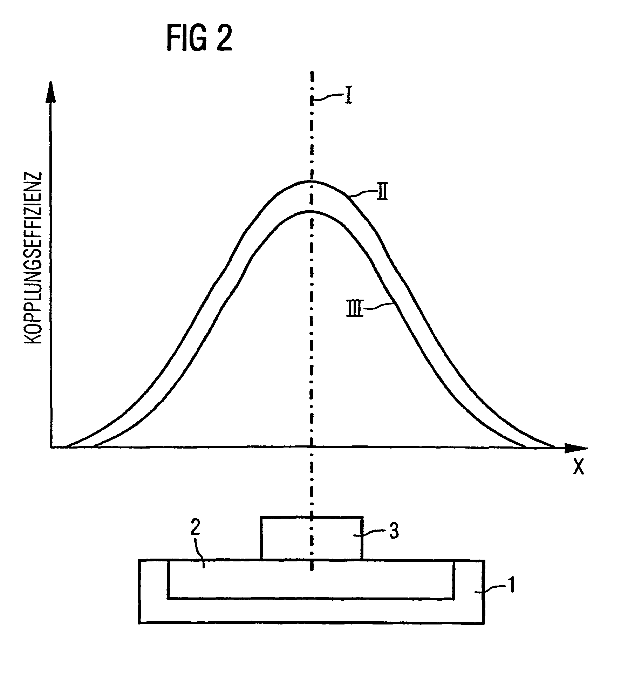

Wie insbesondere in Fig.2 dargestellt ist, führt die erfindungsgemäße Anordnung zum einen dazu, daß die Maxima der Koppelkurven II und III der Empfangsdiode 2 bzw. der Sendediode 3 zusammenfallen. Die Glasfaser 20 wird nun weiterhin derart vor die obere Endfläche der Laserdiode 3 justiert, daß die Faserachse I im wesentlichen mit den Maxima der Koppelkurven II und III zusammenfällt. In dem Bereich der Maxima der Koppelkurven II und III ist die Kopplungseffizienz über einen relativ großen Bereich in lateraler Richtung (x-Richtung) relativ konstant. Somit führt ein entsprechender lateraler Faserversatz auch nur zu einer entsprechend geringfügigen Änderung der Kopplungsbedingungen.

In dem gewählten Ausführungsbeispiel betrug die Kantenlänge des quadratischen Substrats 1,35 mm, die Kantenlänge der quadratischen Metallisierungsfläche 3A 430 µm und die Kantenlänge der Laserdiode 300 µm und die Kantenlänge der Metallisierungsfläche 3B 110 µm.

Das gewählte Ausführungsbeispiel zeichnet sich dadurch aus, daß die photoempfindliche Fläche 2 und die Laserdiode 3 zylindersymmetrisch zur Faserachse angeordnet sind. Dies ist nicht unbedingt notwendig. Von Bedeutung ist vielmehr, daß die Abstrahlcharakteristik der Laserdiode und die Empfangscharakteristik der Empfangsdiode zylindersymmetrisch zur Faserachse sind.

In dem gewählten Ausführungsbeispiel ist die Sendeeinrichtung zwischen der Empfangseinrichtung und dem Ein-/Austrittsende der Glasfaser angeordnet. Es ist jedoch auch der umgekehrte Fall denkbar, bei dem die Empfangseinrichtung zwischen der Sendeeinrichtung und dem Ein-/Austrittsende der Glasfaser angeordnet ist. In analoger Weise zu dem Ausführungsbeispiel könnte beispielsweise die Sendediode eine relativ großflächige Lichtaustrittsfläche haben und in einem mittleren Bereich dieser Lichtaustrittsfläche eine relativ kleinflächige photoempfindliche Fläche einer Empfangsdiode angeordnet werden.

## Patentansprüche

1. Sende-/Empfangsetnrichtung für eine mit einer Glasfaserstrecke versehene optische, bidirektionale Übertragungsanordnung, umfassend
- eine Sendeeinrichtung (3) und eine Empfangseinrichtung (2), die auf einem gemeinsamen Substrat (1) angeordnet sind, wobei die Sende- (3) oder Empfangseinrichtung (2) innerhalb der Flache der jeweils anderen Empfangs- (2) oder Sendeeinrichtung (3) positioniert ist und wobei das Maximum der Koppelkurve (III) der Sendceinrichtung (3) und das Maximum der Koppelkurve (II) der Empfangseinrichtung (2) zusammenfallen, und
- wobei an die Sendeeinrichtung (3) und die Empfangseinrichtung (2) eine optische Glasfaser (20) ankoppelbar ist, und zwar derart, dass die Faserachse (I) der Glasfaser (20) mit den Maxima der Koppelkurven (II, III) zusammenfällt,
**dadurch gekennzeichnet, dass**
- die Glasfaser derart ankoppelbar ist, dass die Lichtein- oder -austrittsfläche der Glasfaser (20) sowohl der Lichtaustrittsfläche der Sendeeinrichtung (3) als auch der Lichteintrittsfläche der Empfangseinrichtung (2) unmittelbar gegenübersteht.

2. Sende-/Empfangseinrichtung nach Anspruch 1, **dadurch gekennzeichnet, dass** die Empfangseinrichtung (2) eine photoempfindliche Fläche aufweist und dass in einem mittleren Bereich der photoempfindlichen Fläche eine Laserdiode als Sendeeinrichtung (3) angeordnet ist.

3. Sende-/Empfangseinrichtung nach Anspruch 2, **dadurch gekennzeichnet, dass** die photoempfindliche Fläche (2) und die Laserdiode (3) zylindersymmetrisch zur Faserachse angeordnet sind.

## Claims

1. Transmission/reception device for a bidirectional optical transmission arrangement provided with a glass fibre section, comprising
- a transmission device (3) and a reception device (2) which are arranged on a common substrate (1), wherein the transmission device (3) or the reception device (2) is positioned inside the area of the other of the reception device (2) or the transmission device (3), respectively, and the maximum of the coupling curve (III) of the transmission device (3) coincides with the maximum of the coupling curve (II) of the reception device (2), and wherein
- an optical glass fibre (20) can be coupled to the transmission device (3) and the reception device (2), specifically so that the fibre axis (I) of the glass fibre (20) coincides with the maxima of the coupling curves (II, III),
**characterized in that**
- the glass fibre can be coupled so that the light entry or exit surface of the glass fibre (20) directly faces both the light exit surface of the transmission device (3) and the light entry surface of the reception device (2).

2. Transmission/reception device according to Claim 1, **characterized in that** the reception device (2) comprises a photosensitive surface, and **in that** a laser diode is arranged as the transmission device (3) in a central region of the photosensitive surface.

3. Transmission/reception device according to Claim 2, **characterized in that** the photosensitive surface (2) and the laser diode (3) are arranged with cylindrical symmetry with respect to the fibre axis.

## Revendications

1. Dispositif émetteur/récepteur pour un dispositif de transmission optique bidirectionnel muni d'une section en fibres de verre, comprenant
- un dispositif (3) émetteur et un dispositif (2) récepteur qui sont disposés sur un substrat (1) commun, le dispositif (3) émetteur ou le dispositif (2) récepteur étant mis en position dans la surface de, respectivement, l'autre dispositif (2) récepteur ou dispositif (3) émetteur et le maximum de la courbe (III) de couplage du dispositif (3) émetteur et le maximum de la courbe (II) de couplage du dispositif (2) récepteur coïncidant, et
- dans lequel il peut être couplé au dispositif (3) émetteur et au dispositif (2) récepteur une fibre (20) optique en verre et cela de sorte que l'axe (I) de la fibre (20) en verre coïncide avec les maximums des courbes (II, III) de couplage,
**caractérisé en ce que**
la fibre en verre peut être couplée de manière à ce que la surface d'entrée de la lumière ou de sortie de la lumière de la fibre (20) en verre soit directement en face tant de la surface de sortie de la lumière du dispositif (3) émetteur que de la surface d'entrée de la lumière du dispositif (2) récepteur.

2. Dispositif émetteur/récepteur suivant la revendication 1, **caractérisé en ce que** le dispositif (2) récepteur comporte une surface photosensible et **en ce qu'**une diode laser est disposée en tant que dispositif (3) émetteur dans une partie centrale de la surface photosensible.

3. Dispositif émetteur/récepteur suivant la revendication 2, **caractérisé en ce que** la surface (2) photosensible et la diode (3) laser sont cylindrosymétriques par rapport à l'axe de la fibre.
